# EUROPEAN PATENT SPECIFICATION

(11) **EP 4 458 680 B1**
(45) Date of publication and mention of the grant of the patent: **11.02.2026**
(21) Application number: 23171875.0
(22) Date of filing: 05.05.2023
(51) Int. Cl.: B64D 37/00, B64D 37/32, B60K 15/035, F17C 13/12, H01B 17/30, B60K 15/03

(54) **DOUBLE BARRIER FEEDTHROUGH**
DOPPELBARRIERE-DURCHFÜHRUNG
TRAVERSÉE À DOUBLE BARRIÈRE

(43) Date of publication of application: 06.11.2024
(73) Proprietor: Airbus Operations GmbH, 21129 Hamburg (DE)
(72) Inventor: KASSEGNE, Bemnet, 21129 Hamburg (DE)
(74) Representative: LKGLOBAL Partnerschaftsgesellschaft mbB

(56) References cited:
- EP-A1- 4 129 827
- WO-A1-2022/234176
- CN-A- 112 576 929
- CN-A- 114 060 719
- CN-A- 114 962 988
- CN-U- 207 433 266
- DE-A1- 102010 015 401

## Description

### FIELD OF THE INVENTION

The present invention relates to providing a passing of supply lines of a storing unit onboard a vehicle; more specifically, the inventions relates to a connection device, to a connection arrangement, to a supply system, to an aircraft comprising the supply system and to a method for clearing leaked fluid from a supply system.

### BACKGROUND OF THE INVENTION

Storing units such as fuel tanks onboard a vehicle like an aircraft may be equipped with sensing device or other components which may require a wiring or other supply line connection from inside the storing unit to the outside of the storing unit. A sealing barrier may be provided through which the supply lines pass. As an example, in case of storing pressurized fluids, the barrier, and the supply lines passing through, need to fulfil high-pressure sealing criteria. As another example, in case of storing fluids with large diffusivity characteristics, the barrier, and the supply lines passing through, need to show a high leak-tightness. However, it has been shown that additional complex measures like ventilation of storage areas may be needed in case of leakage.

EP 4 129 827 A1 relates, according to the translation as provided by espacenet, to an aircraft comprising at least one hydrogen engine, at least one hydrogen supply device comprising at least one hydrogen tank and at least one piece of equipment through which the hydrogen passes, positioned between the hydrogen tank and the hydrogen engine. The aircraft comprises at least one container sealed against the outside air, in which the equipment of the hydrogen supply device is positioned.

CN 112 576 929 A discloses, according to its abstract, a pressure container cable cabin sealing device, which has a cable fixed on connecting sections, sealing fillers arranged in a pipe body at intervals, and a pressure monitoring device fixed on a pipe body between the sealing fillers.

### SUMMARY OF THE INVENTION

There may thus be a need for improving the guidance of supply lines from a storing unit.

The object of the present invention is solved by the subject-matter of the independent claims; further embodiments are incorporated in the dependent claims. It should be noted that the following described aspects of the invention apply also for the connection device, for the supply system, for the aircraft and for the method.

According to the present invention, a connection device for passing supply lines from a storing unit to an environment of the storing unit is provided. The device comprises a retainer volume encapsulated by an enclosure, a first feedthrough and a second feedthrough. The first feedthrough is arranged attached to the enclosure and is configured to sealingly pass supply lines from an inner lumen of the storing unit to the retainer volume. The second feedthrough is arranged attached to the enclosure and is configured to sealingly pass the supply lines from the retainer volume to the environment of the storing unit. The first feedthrough, the second feedthrough and the enclosure are configured to be leak-tight for a fluid stored in the storing unit. The retainer volume is configured to capture fluid leaking through the first feedthrough and to prevent leaked fluid to reach the environment of the storing unit.

As an advantage, a secondary barrier is presented by the connection device that will prevent explosive atmosphere creation outside the storage unit e.g. in case of a leakage of the first barrier, i.e. the first feedthrough. The capturing in the retainer volume and thus avoiding the mixture with environmental air prevents that an explosive atmosphere is provided.

As an advantage, a cable feedthrough with a higher redundancy with respect to leakage is yielded. Overall a more leak-tight cable feedthrough is yielded.

As an effect, explosive aggregations of fluid in the environment of the storing unit are mitigated.

This also allows a more secure cable feedthrough.

According to an example, the retainer volume is configured to provide an inert fluid. The inert fluid is configured to mix with the leaked fluid to yield a non-explosive fluid mixture.

According to an example, the enclosure is configured to be connected to a sensor for detecting if leaked fluid is present inside the retainer volume.

According to an example, the enclosure is configured to be connected to a valve arrangement configured to vent the retainer volume.

According to the present invention, also a connection arrangement for passing supply lines from a storing unit is provided. The arrangement comprises at least one supply line conduit, at least one supply line and a connection device according to one of the previous examples. The at least one supply line conduit is configured to be connected to a storing unit and to guide the at least one supply line from the inner lumen of the storing unit to the connection device. The at least one supply line extends within the at least one supply line conduit through the first feedthrough into the retainer volume and from the retainer volume through the second feedthrough to the environment.

According to the present invention, also a supply system is provided. The supply system comprises a storing unit storing a fluid in an inner lumen and a connection arrangement according to one of the previous examples. The connection arrangement is connected to the inner lumen of the storing unit via the first feedthrough. The connection arrangement is configured to pass the supply lines from the inner lumen of the storing unit to the environment of the storing unit without leaked fluid from the storing unit.

As an advantage, a more controllable storing unit is established.

According to the present invention, also an aircraft is provided. The aircraft comprises a propulsion system, an airframe, a fuel storage space and a supply system according to the previous example. The airframe is attached to the aircraft and the propulsion system is attached to the airframe and both are configured to levitate and/or accelerate the aircraft on a mission. The supply system is configured to be located in the fuel storage space and stores fuel inside the aircraft. The supply system is configured to supply the propulsion system with fuel on the mission. In an option, alternatively or in addition, the supply system is configured to supply other systems used during operation of the aircraft, such as a power supply for aviation systems or onboard entertainment.

As an advantage, a more controllable aircraft is yielded.

According to the present invention, also a method for clearing leaked fluid from a supply system is provided. The method comprises the following steps:
- Providing a supply system according to one of the previous examples;

- Attaching a sensor to an enclosure of the supply system;
- Providing fluid to the supply system;
- Operating the sensor while operating the supply system;
- Detecting leaked fluid inside the retainer volume by the sensor;
- Capturing the leaked fluid from a first feedthrough by the enclosure;
- Mixing the leaked fluid with inert fluid in the enclosure to yield a non-explosive fluid; and
- Releasing the non-explosive fluid from the enclosure.

According to an aspect, a connection device, or a cable supply is connected to a tank storing a fuel. The supply is connected via its first entry to the tank. The first entry is forming a first b blockage between the fuel and an environment of the tank. In case the first entry is leaking, and the first blockage is broken, the supply acts as retention basin and the fuel streams into the supply. A second entry of the supply closes the retention basin and forms a second blockage and the fuel does not contact or mix with the environment of the tank.

According to an aspect, the connection device presents a first barrier plus a secondary barrier that will prevent explosive atmosphere creation and an enclosed volume between the two barriers. It also allows a detection of first barrier failure and activates safety switches and safely vent the mixture.

According to an aspect, an enclosure forms a secondary diffusion barrier around an access point to a storing unit. Sites that are used to surveil a storing unit are thus provided with an improved safety for operation the storing unit.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a cross-section of an example of a connection device.
Fig. 2 schematically shows a more detailed cross-section of an example of a connection device.
Fig. 3 schematically shows a cross-section of an example of a connection arrangement and a supply system.
Fig. 4 schematically shows an example of an aircraft comprising the supply system.
Fig. 5 shows basic steps of an example of a method for clearing leaked fluid from a supply system.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

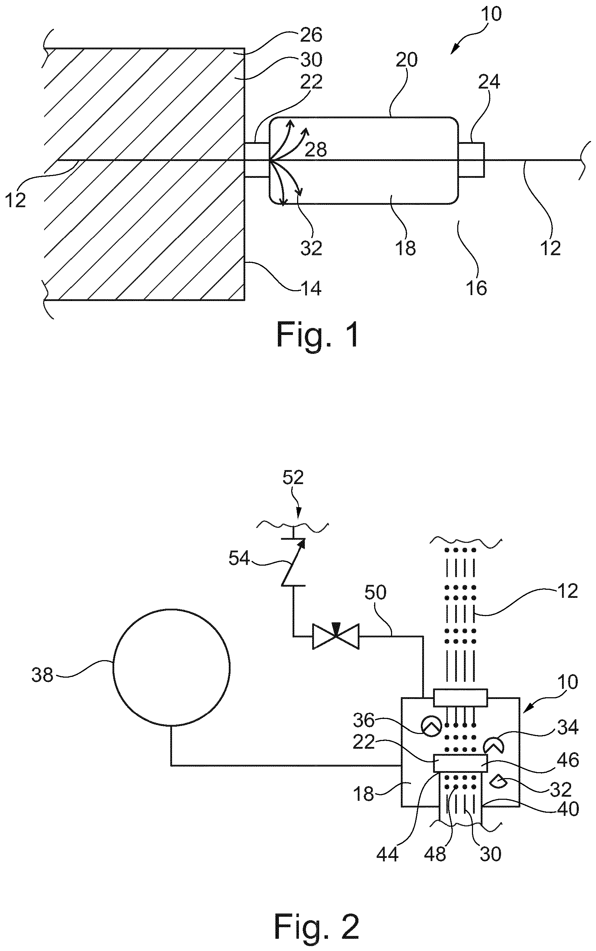

Fig. 1 schematically shows a cross-section of a general example of a connection device 10 for passing supply lines 12 from a storing unit 14 to an environment 16 of the storing unit 14. The connection device 10 comprises a retainer volume 18 encapsulated by an enclosure 20, a first feedthrough 22 and a second feedthrough 24. The first feedthrough 22 is arranged attached to the enclosure 20 and is configured to sealingly pass supply lines 12 from an inner lumen 26 of the storing unit 14 to the retainer volume 18. The second feedthrough 24 is arranged attached to the enclosure 20 and is configured to sealingly pass the supply lines 12 from the retainer volume 18 to an environment 16 of the storing unit 14. The first feedthrough 22, the second feedthrough 24 and the enclosure 20 are configured to be leak-tight (arrows 28 for a fluid 30 stored in the storing unit 14. The retainer volume 18 is configured to capture fluid leaking through the first feedthrough 22 and to prevent the leaked fluid 32 to reach the environment 16 of the storing unit 14.

It is noted that the supply lines 12 and the storing unit 14 as well as the environment 16 are shown for better explanation. In an option, they are not part of the connection device 10 itself.

The term "connection device" refers to a connector, a transition or an adapter for guiding the supply lines out of a storing unit, respectively into a storing unit.

The term "passing" refers to any word describing a transit between two separate spaces.

The term "supply line" refers to a cable, a conduit, a pipe, a wire, a waveguide, or a tube.

In an example, the supply line 12 of Fig. 1 is an object that is capable of transporting energetical, structural or material differences between two separate spaces, volumes or phases in a predefined direction.

The term "storing unit" refers to a tank, a vessel, a container, a cistern or a basin. In an example, the storing unit 14 of Fig. 1 can also be a tube or a pipe or a piping system.

The storing unit 14 also can be referred to as storage unit.

In an example, the storing unit 14 is configured to store and transport a volume. The storing unit 14 possesses an encased volume, an inner lumen 26 respectively, that is capable of storing the volume. The storing unit 14 is configured to separate and isolate the volume from the outer surroundings of the storing unit 14 in Fig. 1.

In an example, the storing unit 14 is configured to supply the stored volume to a given purpose, not shown in detail in Fig. 1.

In an example, the storing unit 14 is configured to be an integral part of the machinery or a structural part of a vehicle, such as an aircraft or a car, not further shown in Fig. 1.

The term "environment" refers to the surrounding of the storing unit 14 in its closer periphery or proximity. The term environment 16 refers to the surroundings of the storing unit 14 inside the vehicle, such as the internal environment 16 of the vehicle, whereas the outside of the vehicle can be referred to as external environment 16. The environment 16 refers to the inside spacing of the vehicle that bears the storing unit 14.

The term "enclosure" refers to a chamber, an envelope, a compartment, a room, a balloon, a void, a bubble, or a box according to several options of Fig. 1.

The enclosure 20 can also be referred to as retainer.

In an example, the enclosure 20 can be made from any material that is configured to be gas leak-tight and pressure-proven, e.g. a metal.

In an example, the connection of the enclosure 20 to the feedthroughs is configured to be gas leak-tight, e.g. for hydrogen gas.

In an example, the position of the feedthroughs can be added to any point of the surface of the enclosure 20 of Fig. 1.

In an example, there are more than two feedthroughs, for example three or four feedthroughs, arranged at the enclosure 20.

In an example, the enclosure 20 is thermally insulated.

In an example, the retainer volume 18 is configured to be expendable.

The term "encapsulated" refers to isolating or separating a volume from another volume or dividing volumes, without providing any contact between the volumes.

The term "retainer volume" refers to any space or lumen that is capable of taking up a volume or a fluid 30. The retainer volume 18 can also be referred to as retention basin, buffer volume or basin.

In an example, the pressure in the retainer volume 18 is lower than in the storing unit 14.

The term "feedthrough" refers to a clearance hole, a through boring, a via hole or a cable bushing that is able to conduct a supply line 12 between to separate volumes, such that the separated volumes do not contact each other.

The term "sealingly pass" refers to the afore mentioned way of passing, guiding, leading, transiting, traversing or conducting a supply line 12 through the feedthrough.

In an example, sealingly passing implies that a fluid on one side of the feedthrough cannot creep or permeate along the interface between the boring and the supply line 12 in the feedthrough to arrive at the other side of the feedthrough in Fig. 1. The supply lines 12 are sealed in the feedthrough with the feedthrough to form a unity impermeable to any fluid 30. The feedthrough becomes a physical barrier except for the supply lines 12.

In an example, sealingly passing the supply lines 12 through the feedthrough is realized by clamping the supply lines 12 tightly together by the feedthrough, such that no other volume than the supply lines 12 can pass the feedthrough. This volume also includes the substances conducted by the supply lines 12.

In an example, sealingly passing the supply lines 12 through the feedthrough can be realized by fusing an insulation of the supply lines 12 or fusing the supply lines 12 with the feedthrough. The supply lines themselves pass and reach through a physical barrier.

In an example, sealingly passing the supply lines 12 through the feedthrough can be realized by providing supply line connectors on both sides of the feedthrough, the feedthrough being a physical barrier without any cable boring. The supply line connectors are connected in the feedthrough, enclosed in a leak-tight matrix and provide signal transmission between the supply lines 12 connected to the supply line connectors on either side of the feedthrough. The supply line connectors are referred to as pins. The supply line connectors pass and reach through a physical barrier, but not the supply lines themselves.

In an example, the feedthroughs sealingly passing a supply line 12 provide a barrier against hydrogen gas.

In an example, a feedthrough is provided by contactless connection of two supplies through a separating object.

In an example, the feedthroughs are configured to sustain and withstand cryogenic temperatures.

In an example, the feedthroughs are configured to be resistant against temperature-induced movement.

In an example, the feedthrough acts as a cable boring with a gasket or tightening for the cable.

The term "inner lumen" can also be referred to as inside, interior, or cavity.

The term "leak" refers to a channel, a fracture, a bore, a recess in an object that permits exchange of two environments separated by the object. The term "leaking" refers to the exchange of the two environments, either in the direction of one of the environments or between both environments. The leaks are not depicted in Fig. 1.

The term "leak-tight" refers to a condition, e.g., of a form fit bounding between to objects or the object itself, separating two environments. The condition minimizes the contact of the outside and the inside of the bounding with the separated environments.

The term "fluid" refers to e.g. a liquid or a gas that continuously deforms, i.e., flows, under an applied shear stress, or external force.

The fluid 30 stored in the storing unit 14 of Fig. 1 can also be referred to as fuel.

In an example, the fluid 30 can be any substance carrying a form of energy, i.e. a fuel. In an example, the storing unit 14 is configured to store a fuel. In an example, the storing unit 14 is configured to store hydrogen in liquid and gaseous form. In an example, the storing unit 14 is configured to store hydrogen containing substances. In an example, the storing unit 14 is configured to store cryogenic fluid or fluid under high pressure.

In an example, the storing unit 14 comprises an inner tank and an outer tank, not shown in Fig. 1. The inner tank is configured to store the liquid and the outer tank is configured to insulate the inner tank from the environment 16.

In an example, two types of connections are provided.

In an example, the connection device of Fig. 1, having a plurality of cables, uses two feedthroughs. An example for the feedthroughs are the so-called ATEX feedthroughs (French: *ATmosphères EXplosives*)*.* The connection with two feedthroughs is designed as such that the first ATEX feedthrough is connected (via the retainer volume) to the second ATEX feedthrough which in turn is connected to the data acquisition center. The first feedthrough 22 acts as a barrier between the hydrogen filled storage unit, e.g., a pipe and the enclosure, e.g. a box, or chamber, filled with, e.g. inert gas, i.e. an inert gas box. In case of a leakage of the first feedthrough 22, the leaking hydrogen will mix with inert gas, e.g. helium, and the creation of an explosive mixture is avoided.

In further examples, other types of an inert fluid, e.g. another inert gas, are provided. The inert gas can be chosen according to the temperature, or expected temperature range, of the leaking gas such as leaking hydrogen at the first feedthrough. If the temperature of the leaking gas is low, the inert gas is provided such that it preferably stays in its gaseous state to better mix with the leaking gas. Helium can be used, e.g. for hydrogen leakage, since helium does not liquify at the expected LH2 temperatures.

The term "LH2" or "lH2" refers to liquid hydrogen.

In an example, an inert gas with a lower boiling point than hydrogen is chosen, to ensure proper mixing of the inert gas with the leaking gas to yield a non-explosive gas mixture.

In another example, a preheated inert gas is mixed with the leaking gas.

The second feedthrough 24 acts as a barrier between the inert gas filled box and the ambient environment. In case of the leakage of the second feedthrough 24, the first barrier will serve as a means of protection of air, e.g. oxygen going in the hydrogen pipe and from creation of an explosive mixture.

In an example, the connection device is a double barrier electrical feedthrough connection to a liquid hydrogen inner tank. It can be used to safely connect sensors placed inside the inner tank to electrical source or data acquisition systems in the ambient environment, i.e. outside the inner tank. It presents a secondary barrier that will prevent explosive atmosphere creation. It also allows a detection of first barrier failure and activate safety switches and safely vent the mixture.

Fig. 2 schematically shows a more detailed cross-section of an example of a connection device 10. The retainer volume 18 of Fig. 2 is configured to provide an inert fluid 34. The inert fluid 34 is configured to mix with the leaked fluid 32 to yield a non-explosive fluid mixture 36.

The term "inert" can be referred to as unreactive.

In an example, the environment 16 of the storing unit 14 in Fig. 2 comprises fluids that react vigorously with the fluid 30 from the storing unit 14 under sudden release of energy, causing explosions. The inert fluid 34 in the enclosure 20 prevents fluids from the environment 16 to enter the enclosure 20 and prevents fluid 30 from the storing unit 14 to enter the enclosure 20. The inert fluid 34 prevents fluids from the environment 16 to mix with fluids 30 from the storing unit 14.

In an example, the inert fluid 34 mixes with fluid 30 from the storing unit 14 in the enclosure 20 and the fluid mix, e.g. the non-explosive fluid mixture 36 in Fig. 2 is thereafter removed from the enclosure 20.

In an example, the fluid of the environment 16 is the atmosphere and the atmosphere comprises oxygen. The inert fluid 34 hampers the oxygen of the atmosphere to react with the fluid 30 from the storing unit 14, i.e. hydrogen, to prevent explosions.

In an example, the inert gas in the enclosure 20 of Fig. 2 can be regarded as protective gas insulation. The protective gas insulation hampers the diffusion of fluid into the environment 16 of the storing unit 14.

In an example, the inert fluid 34 is provided inside the retainer volume 18 and the inert gas is configured to mix with the leaked fluid 32 to yield a non-explosive fluid mixture 36 in Fig. 2.

In an example, the inert fluid 34 is a protection gas. The gas comprises one of the group of: nitrogen, helium, argon, krypton.

In an example, the inert fluid 34 is in a liquid state or is a liquid substance at standard conditions.

In another example, the inert fluid 34 is a liquid or a solid substance capable of adsorbing or reacting with the fluid 30 from the storing unit 14 in Fig. 2.

In an example, the retainer volume 18 or the enclosure 20 are configured with devices or a certain shape to maximize the mixing of the inert fluid 34 and the leaked fluid 32, not shown in Fig. 2.

In an example, the pressure of the fluid in the storing unit 14 is higher, than the pressure of the inert fluid 34 in the retainer volume 18.

In an example, the pressure of the inert fluid 34 in the enclosure 20 is lower than atmospheric pressure.

In an example, the enclosure 20 is configured to be suppliable by an external source of inert fluid 34.

In an example, the connection device 10 can be regarded as inert gas-protected feedthrough.

As an advantage, continuously permeating fluid from the feedthrough at the storing unit 14 can be removed safely by an inert fluid 34 without creating an explosive atmosphere.

As an advantage, the amount of continuously permeating fluid from the feedthrough at the storing unit 14 can be kept below the explosive levels.

In an example of Fig. 2, the enclosure is configured to be connected to a sensor 38 for detecting if leaked fluid 32 is present inside the retainer volume 18.

In an example, the sensor 38 is a hydrogen sensor.

In an example, the sensor 38 is an oxygen sensor.

In an example, the enclosure is configured to connect more than one sensor 38, i.e. configured to connect a hydrogen sensor and a oxygen sensor.

In an example, hydrogen and oxygen sensors are provided, which are connected to the enclosure, i.e., the inert gas box. The inert gas boxes are welded on the storage unit, e.g. pipes, at the bottom. In case of hydrogen or oxygen leak, the sensors will declare an alarm and e.g. a safety procedure on an aircraft, related to this situation will be followed. For example, tank filling will be stopped, and hydrogen safe extraction can be provided once the airplane is on ground before maintenance on the malfunctioning feedthrough. The mixture of hydrogen and nitrogen can be safely evacuated through the valves which are equipped with non return valves, preventing back flow of air in case of valve spurious opening.

In an example, the valve arrangement 50 of Fig. 2 is an automatic valve arrangement and connected to a controlling unit. The sensor 38 is configured to generate a signal that can be transmitted to the controlling unit of the valve arrangement in order to operate the valve arrangement.

As an advantage a detection of first barrier failure, activation of safety switches and safely venting of the mixture is allowed.

In an example of Fig. 2, the enclosure comprises a connection 40 for sealingly attaching a supply line conduit 42 guiding the supply lines 12 from the storing unit 14 to the connection device 10. The first feedthrough 22 is provided at an end 44 of the supply line conduit. The first feedthrough 22 provides a barrier 46 between an inner volume 48 of the supply line conduit 42 and the retainer volume 18.

In an example, the enclosure of the connection device 10 in Fig. 2 also encloses the connection of the first feedthrough 22 to the storing unit 14, such that leaked fluid 32, that permeates through the connection of the first feedthrough 22 and the storing unit 14 is taken up by the enclosure.

In an option of the example not shown in Fig. 2, at least one of the first feedthrough 22 and the second feedthrough 24 is an ATEX feedthrough.

In an example, the feedthroughs are configured that they prevent the contact between a fluid 30 and their supply lines 12. The feedthroughs isolate the supply lines 12 from the fluid 30.

In an example, Spectite (trademark) feedthroughs are deployed.

In an example of Fig. 2, the enclosure is configured to be connected to a valve arrangement 50 configured to vent the retainer volume 18.

In an example, an automatic valve arrangement is connected to the enclosure.

In an example, the automatic valve arrangement is configured to be operated remotely.

In an example, in case of the connection device 10 of Fig. 2 being aboard an aircraft, the valve arrangement 50 is connected with its exhaust pipe to the external environment 16 of the aircraft, which is not shown in Fig. 2.

In an example, the valve arrangement 50 is configured to be connected to a controller unit and the venting of the retainer volume 18 can be automatized or made dependent on other parameters of the system the controller unit is connected to.

As an advantage, remote operation of the valve arrangement 50 increases safety of the connection device 10.

In an example of Fig. 2, the enclosure is configured to be connected to a valve arrangement that prevents a flow-back (arrow 52 in Fig. 2) of an environmental fluid 54 into the retainer volume 18.

In an example, the valve arrangement that prevents a flow-back of an environmental fluid 54 is configured to prevent oxygen from entering the enclosure through the valve arrangement 54.

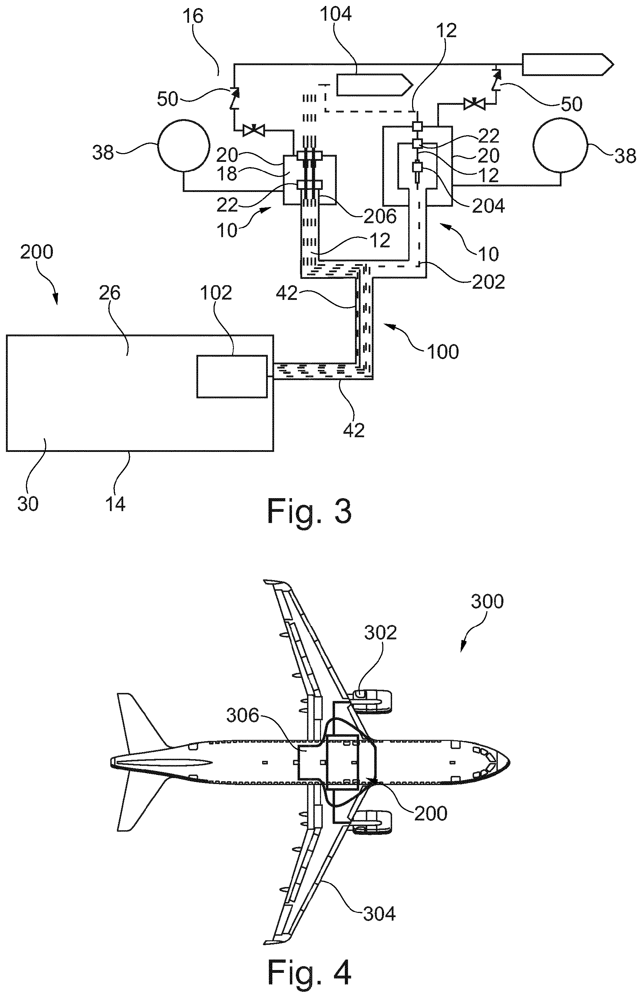

Fig. 3 schematically shows a cross-section of an example of a connection arrangement 100 for passing supply lines 12 from a storing unit 14. The connection arrangement 100 comprises at least one supply line conduit 42, at least one supply line 12 and an example of the connection device 10 according to one of the previous examples. The at least one supply line conduit 42 is configured to be connected to the storing unit 14 and to guide the at least one supply line 12 from the inner lumen 26 of the storing unit 14 to the connection device 10. The at least one supply line 12 extends within the at least one supply line conduit 42 through the first feedthrough 22 into the retainer volume 18 and from the retainer volume 18 through the second feedthrough 24 to the environment 16.

In an example, the storing unit 14 comprises an inner and an outer tank, not shown in Fig. 3 for reasons of simplicity. The connection device 10 is located at the outer tank and a connection between the inner tank and the connection device 10 is provided by the supply line conduit 42 that traverses the outer tank.

In an example, the connection device 10 is connected to the supply line conduit 42 by welding.

In an example not shown in Fig. 3, the supply lines 12 are provided as at least one of the group of cables for transmitting electrical signals, cables for transmitting electrical power, optical guides for transmitting optical signals, thermal guides for transmitting thermal signals and pipes for transporting substances between an inner lumen 26 of the storing unit 14 and the environment 16.

In an example, the supply lines 12 are leak-tight and configured to prevent leaking of the fluid 30 inside the supply lines 12 and along the supply lines 12, such that the supply lines 12 prevent the transport of the leaked fluid 32 along the supply lines 12, not shown in Fig. 3.

In an example, the supply lines are configured for transmitting electrical signals and electrical power as well.

In an example, the optical guides are glass fibers.

In an example, the thermal guides are thermo-couples.

In an example, the pipes conduct inert fluid 34 into the storing unit 14 to clean the storing unit 14 from the stored fluid, also not shown in Fig. 3.

In an option of the example of Fig. 3, the connection arrangement 100 further comprises an inner unit 102 and an outer unit 104. The inner unit 102 is connected to the at least one supply line 12. The outer unit 104 is also connected to the at least one supply line 12. The inner unit 102 comprises at least one of the group of: sensing unit and heating element. The outer unit comprises at least one of the group of: data acquisition unit and electrical power source. The outer unit is configured to retrieve signals from and/ or supply power to the inner unit in the inner lumen of the storing unit.

The term "data acquisition unit" can also be referred to as "data acquisition center".

In an example, the inner unit 102 is a sensing element configured to provide sensing within the storing unit. The outer unit 104 is a data acquisition unit configured to receive and process the sensed data.

In an example, the inner unit 102 is a heating element configured to provide heating to a part of the fluid stored in the storing unit. The outer unit 104 is an electrical power source to supply the heating source with electric energy.

In an example, the inner unit 102 comprises a sensing element as well as a heating element. The outer unit 104 comprises a data acquisition unit as well as an electrical power source.

In an example, a double barrier feedthrough system for LH2 vessels, e.g. the storing unit 14 in Fig. 3, with electrical sensors inside is provided. Sensors placed inside the inner tank of the LH2 vessels are connected to the acquisition and control systems placed outside in the ambient environment 16.

In an example, the aim of the connection device 10 is to connect sensors or a heating element inside a liquid hydrogen tank, e.g. the storing unit 14 in Fig. 3, to a data acquisition and control system, or for example an electrical power source, while preventing the creation of an explosive atmosphere in case of failure of one barrier.

As an advantage, a safe and protected surveillance is provided.

Fig. 3 also schematically shows a cross-section of a supply system 200. The supply system 200 comprises a storing unit 14 storing a fluid 30 in an inner lumen 26 and an example of the connection arrangement 100 according to one of the previous examples and options. The connection arrangement 100 is connected to the inner lumen 26 of the storing unit 14 via the first feedthrough 22. The connection arrangement 100 is configured to pass the supply lines 12 from the inner lumen 26 of the storing unit 14 to the environment 16 of the storing unit 14 without leaked fluid 32 from the storing unit 14.

In an example, the storing unit 14 stores hydrogen in liquid or fluid state.

In an option of the example of Fig. 3, the inner lumen 26 of the storing unit 14 comprises coaxial cables 202. A transition 204 is provided between the coaxial cables 202 and the supply lines 12 of the supply system 200. The transition 204 is configured to transmit signals of the coaxial cable 202 to the supply lines 12. The transition 204 is configured such that the signals of the coaxial cable 202 pass the first feedthrough 22 by the supply lines 12.

In an example, the supply system 200 comprising the coaxial cables 202 represents a second type of connection in Fig. 3. It possesses a first connection between a sensor inside the tank, for example a capacitive gauge, to a non-ATEX connector, which is connected to a first ATEX feedthrough, the latter being directly connected to a second ATEX feedthrough which in turn is connected to the data acquisition center. The retainer volume is provided between the first and the second ATEX connector.

The main difference between the first type, shown at the left side of Fig. 3 and second type, shown at the right side of Fig. 3, is the fact that the second type needs to be first connected to a non-ATEX connector in order to be connected to an ATEX feedthrough, because the cables may comprise coaxial cables 202 or triaxial cables. The same protection applies to the second type as in that the first feedthrough 22 acts as a barrier between the hydrogen filled pipe, i.e. the supply line conduit 42, and an inert gas filled box (chamber), i.e. the enclosure. In case of the failure of the first feedthrough 22, the leaking hydrogen will only mix with inert gas, e.g. nitrogen, and won't be able to create an explosive mixture. The second feedthrough 24 acts as a barrier between the inert gas filled box and the ambient environment. In case of the failure of the second feedthrough 24, the first barrier will serve as a means of protection of air, e.g. oxygen, going in the hydrogen pipe and from creation of explosive mixture.

In an example, the transition is a multipin feedthrough and the supply lines comprise the pins of the multipin feedthrough.

In an example, at least one of the first feedthrough 22 and the second feedthrough 24 is a multipin feedthrough.

In an example, the coaxial cable is insulated with respect to fluid leaking into the dielectric material of the coaxial cable. As an advantage, coaxial cables 202 can be used in surveillance of the storing unit 14. As a further advantage, more delicate measurements of the storing unit 14 in Fig. 3 can be executed.

In an example of Fig. 3, a part of the inner lumen 26 of the storing tank forms the supply line conduit 42 with a distal end opening 206. The supply line conduit 42 is configured to enclose the supply lines 12. The connection device 10 is configured to connect to the distal end opening 206 and pass the supply lines 12 from the inner lumen 26 of the storing tank via the supply line conduit 42 to the environment 16 of the supply system 200.

In an example, the supply line conduit 42 is insulated from cryogenic temperatures of the inner tank by the outer tank, not shown in Fig. 3.

In an example, the distal end opening 206 is in a distance to the inner tank that transfer of the cryogenic temperatures of the inner tank to the connection device 10 is mitigated.

In an example, the supply line conduit 42 is configured to insulate the supply system 200 from the temperatures of the fluid 30.

In an example, the supply line conduit 42 is enclosed by an insulation of an outer tank, not shown in Fig. 3.

As an advantage, the connection device 10 is not exposed to the temperature gradient at the storing unit 14.

Fig. 4 schematically shows an example of an aircraft 300 comprising an example of the supply system 200. The aircraft 300 comprises a propulsion system 302, an airframe 304, a fuel storage space 306 and a supply system 200 according to one of previous examples and options. The airframe 304 is attached to the aircraft 300 and the propulsion system 302 is attached to the airframe 304 and both are configured to levitate and/or accelerate the aircraft 300 on a mission. The supply system 200 is configured to be located in the fuel storage space 306 and stores fuel inside the aircraft 300 and the supply system 200 is configured to supply the propulsion system 302 with fuel on the mission.

In an example, the propulsion system 302 is based on hydrogen as propellant.

In an example, the fuel storage space is configured to store hydrogen tanks, respectively storage units storing hydrogen.

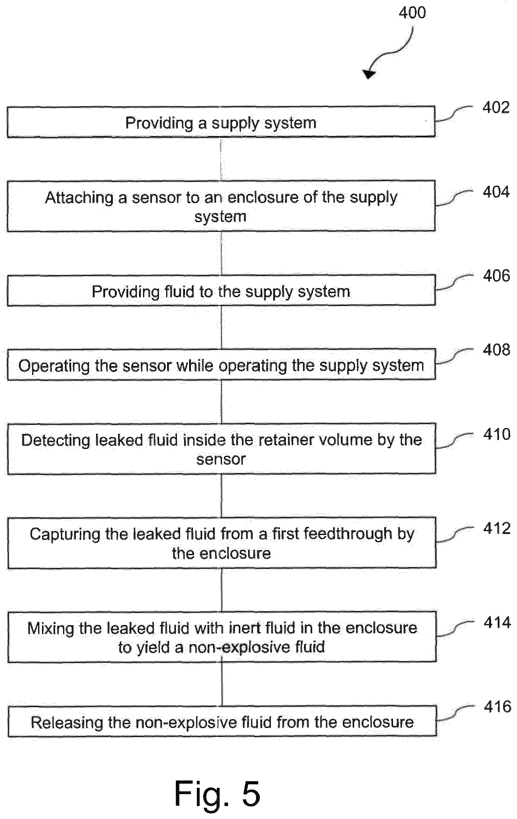

Fig. 5 shows basic steps of an example of a method 400 for clearing leaked fluid 32 from a supply system 200. The method 400 comprises the following steps:
- In a first step 402, a supply system 200 according to one of the previous examples and options is provided.
- In a second step 404, a sensor 38 is attached to an enclosure 20 of the supply system 200.
- In a third step 406, fluid 30 is supplied to the supply system 200.
- In a fourth step 408, the sensor 38 is operated while operating the supply system 200.
- In a fifth step 410, leaked fluid 32 inside the retainer volume 18 is detected by the sensor 38.
- In a sixth step 412, the leaked fluid 32 from a first feedthrough 22 is captured by the enclosure 20.
- In a seventh step 414, the leaked fluid 32 is mixed with inert fluid 34 in the enclosure 20 to yield a non-explosive fluid.
- In an eighth step 416, the non-explosive fluid is released from the enclosure 20.

In an example of the method, not shown in Fig. 5, a leaking site of a fuel system is retrofitted with the connection device 10.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A connection device (10) for passing supply lines (12) from a storing unit (14) to an environment (16) of the storing unit, the device comprising:
- a retainer volume (18) encapsulated by an enclosure (20);
- a first feedthrough (22); and
- a second feedthrough (24);
wherein the first feedthrough is arranged attached to the enclosure and is configured to sealingly pass supply lines from an inner lumen (26) of the storing unit to the retainer volume;
wherein the second feedthrough is arranged attached to the enclosure and is configured to sealingly pass the supply lines from the retainer volume to the environment of the storing unit;
wherein the first feedthrough, the second feedthrough and the enclosure are configured to be leak-tight for a fluid (30) stored in the storing unit; and
wherein the retainer volume is configured to capture fluid leaking through the first feedthrough and to prevent leaked fluid (32) to reach the environment of the storing unit.

2. Device according to claim 1, wherein the retainer volume is configured to provide an inert fluid (34); and wherein the inert fluid is configured to mix with the leaked fluid to yield a non-explosive fluid mixture (36).

3. Device according to one claim 1 or 2, wherein the enclosure is configured to be connected to a sensor (38) for detecting if leaked fluid is present inside the retainer volume.

4. Device according to claim 1, 2 or 3, wherein the enclosure comprises a connection (40) for sealingly attaching a supply line conduit (42) guiding the supply lines from the storing unit to the connection device;
wherein the first feedthrough is provided at an end (44) of the supply line conduit, the first feedthrough providing a barrier (46) between an inner volume (48) of the supply line conduit and the retainer volume.

5. Device according to one of the preceding claims, wherein at least one of the first feedthrough and the second feedthrough is an ATEX feedthrough.

6. Device according to one of the preceding claims, wherein the enclosure is configured to be connected to a valve arrangement (50) configured to vent the retainer volume.

7. Device according to one of the preceding claims, wherein the enclosure is configured to be connected to a valve arrangement that prevents a flow-back of an environmental fluid (54) into the retainer volume.

8. A connection arrangement (100) for passing supply lines from a storing unit, the arrangement comprising:
- at least one supply line conduit (42);
- at least one supply line (12); and
- a connection device (10) according to one of the preceding claims;
wherein the at least one supply line conduit is configured to be connected to the storing unit and to guide the at least one supply line from the inner lumen of the storing unit to the connection device; and
wherein the at least one supply line extends within the at least one supply line conduit through the first feedthrough into the retainer volume and from the retainer volume through the second feedthrough to the environment.

9. Arrangement according to claim 8, wherein the supply lines are provided as at least one of the group of:
i) cables for transmitting electrical signals;
ii) cables for transmitting electrical power;
iii) optical guides for transmitting optical signals;
iv) thermal guides for transmitting thermal signals; and
v) pipes for transporting substances between an inner lumen of the storing unit and the environment.

10. Arrangement according to claim 8 or 9, wherein the connection arrangement further comprises:
- an inner unit (102); and
- an outer unit (104);
wherein the inner unit and the outer unit are both connected to the at least one supply line;
wherein the inner unit comprises at least one of the group of: sensing unit and heating element; and
wherein the outer unit comprises at least one of the group of: data acquisition unit and electrical power source.

11. A supply system (200), comprising:
- a storing unit storing a fluid in an inner lumen; and
- a connection arrangement according to one of claims 8 to 10;
wherein the connection arrangement is connected to the inner lumen of the storing unit via the first feedthrough; and
wherein the connection arrangement is configured to pass the supply lines from the inner lumen of the storing unit to the environment of the storing unit without leaked fluid from the storing unit.

12. System according to claim 11, wherein the inner lumen of the storing unit comprises coaxial cables (202);
wherein a transition (204) is provided between the coaxial cables and the supply lines of the supply system;
wherein the transition is configured to transmit signals of the coaxial cable to the supply lines; and
wherein the transition is configured such that the signals of the coaxial cable pass the first feedthrough by the supply lines.

13. System according to claim 11 or 12, wherein a part of the inner lumen of the storing tank forms the supply line conduit with a distal end opening (206);
wherein the supply line conduit is configured to enclose the supply lines; and
wherein the connection device is configured to connect to the distal end opening and pass the supply lines from the inner lumen of the storing tank via the supply line conduit to the environment of the supply system.

14. An aircraft (300), comprising:
- a propulsion system (302);
- an airframe (304);
- a fuel storage space (306); and
- a supply system according to one of claims 11 to 13
wherein the airframe is attached to the aircraft and the propulsion system is attached to the airframe and both are configured to levitate and/or accelerate the aircraft on a mission;
wherein the supply system is configured to be located in the fuel storage space and stores fuel inside the aircraft; and
wherein the supply system is configured to supply the propulsion system with fuel on the mission.

15. A method (400) for clearing leaked fluid from a supply system:
- Providing (402) a supply system according to one of the claims 11 to 13;
- Attaching (404) a sensor to an enclosure of the supply system;
- Providing (406) fluid to the supply system;
- Operating (408) the sensor while operating the supply system;
- Detecting (410) leaked fluid inside the retainer volume by the sensor;
- Capturing (412) the leaked fluid from a first feedthrough by the enclosure;
- Mixing (414) the leaked fluid with inert fluid in the enclosure to yield a non-explosive fluid; and
- Releasing (416) the non-explosive fluid from the enclosure.

## Patentansprüche

1. Eine Verbindungsvorrichtung (10) zum Weitergeben von Versorgungsleitungen (12) von einer Speichereinheit (14) zu einer Umgebung (16) der Speichereinheit, wobei die Vorrichtung umfasst:
- ein durch ein Gehäuse (20) umschlossenen Rückhaltevolumen (18);
- eine erste Durchführung (22); und
- eine zweite Durchführung (24);
wobei die erste Durchführung an dem Gehäuse angeordnet angebracht ist und konfiguriert ist, um Versorgungsleitungen von einem inneren Lumen (26) der Speichereinheit zum Rückhaltevolumen abdichtend weiterzugeben;
wobei die zweite Durchführung an dem Gehäuse angeordnet angebracht ist und konfiguriert ist, um die Versorgungsleitungen von dem Rückhaltevolumen zur Umgebung der Speichereinheit dichtend weiterzugeben;
wobei die erste Durchführung, die zweite Durchführung und das Gehäuse so konfiguriert sind, um für ein in der Speichereinheit gespeichertes Fluid (30) leckdicht zu sein; und
wobei das Rückhaltevolumen konfiguriert ist, um durch die erste Durchführung leckendes Fluid aufzufangen und zu verhindern, dass leckendes Fluid (32) in die Umgebung der Speichereinheit gelangt.

2. Vorrichtung nach Anspruch 1, wobei das Rückhaltevolumen konfiguriert ist, um ein inertes Fluid (34) bereitzustellen; und wobei das inerte Fluid konfiguriert ist, um sich mit dem leckenden Fluid zu vermischen, um ein nicht explosives Fluidgemisch (36) zu ergeben.

3. Vorrichtung nach einem der Ansprüche 1 oder 2, wobei das Gehäuse konfiguriert ist, um es mit einem Sensor (38) zu verbinden, um zu erkennen, ob sich leckendes Fluid im Rückhaltevolumen befindet.

4. Vorrichtung nach Anspruch 1, 2 oder 3, wobei das Gehäuse eine Verbindung (40) zum dichtenden Anbringen eines Versorgungsleitungsrohrs (42) umfasst, die die Versorgungsleitungen von der Speichereinheit zur Verbindungsvorrichtung führt;
wobei die erste Durchführung an einem Ende (44) des Versorgungsleitungsrohrs vorgesehen ist, wobei die erste Durchführung eine Barriere (46) zwischen einem Innenvolumen (48) des Versorgungsleitungsrohrs und dem Rückhaltevolumen bildet.

5. Vorrichtung nach einem der vorstehenden Ansprüche, wobei mindestens eine der ersten Durchführung und zweiten Durchführung eine ATEX-Durchführung ist.

6. Vorrichtung nach einem der vorstehenden Ansprüche, wobei das Gehäuse so konfiguriert ist, dass es mit einer Ventilanordnung (50) verbunden werden kann, die so konfiguriert ist, dass sie das Rückhaltevolumen entlüftet.

7. Vorrichtung nach einem der vorstehenden Ansprüche, wobei das Gehäuse so konfiguriert ist, dass es mit einer Ventilanordnung verbunden werden kann, die ein Zurückfließen eines Umgebungsfluids (54) in das Rückhaltevolumen verhindert.

8. Eine Verbindungsanordnung (100) zum Weitergeben von Versorgungsleitungen aus einer Speichereinheit, wobei die Anordnung umfasst:
- mindestens ein Versorgungsleitungsrohr (42);
- mindestens eine Versorgungsleitung (12); und
- eine Verbindungsvorrichtung (10) gemäß einem der vorstehenden Ansprüche;
wobei das mindestens eine Versorgungsleitungsrohr konfiguriert ist, um mit der Speichereinheit verbunden zu sein und die mindestens eine Versorgungsleitung vom inneren Lumen der Speichereinheit zur Verbindungsvorrichtung zu führen; und
wobei sich die mindestens eine Versorgungsleitung innerhalb des mindestens einen Versorgungsleitungsrohrs durch die erste Durchführung in das Rückhaltevolumen und vom Rückhaltevolumen durch die zweite Durchführung in die Umgebung erstreckt.

9. Anordnung gemäß Anspruch 8, wobei die Versorgungsleitungen als mindestens eine der folgenden Gruppen vorgesehen sind:
i) Kabel zur Übertragung elektrischer Signale;
ii) Kabel zum Übertragen elektrischer Energie;
iii) optische Leiter zur Übertragung optischer Signale;
iv) thermische Leiter zur Übertragung thermischer Signale; und
v) Schläuche zum Transportieren von Substanzen zwischen einem inneren Lumen der Speichereinheit und der Umgebung.

10. Anordnung gemäß Anspruch 8 oder 9, wobei die Verbindungsanordnung ferner umfasst:
- eine Inneneinheit (102); und
- eine äußere Einheit (104);
wobei die innere Einheit und die äußere Einheit beide mit der mindestens einen Versorgungsleitung verbunden sind;
wobei die innere Einheit mindestens eines der folgenden Elemente umfasst: eine Sensoreinheit und ein Heizelement; und
wobei die äußere Einheit mindestens eines der folgenden Elemente umfasst: Datenerfassungseinheit und Stromquelle.

11. Ein Versorgungssystem (200), umfassend:
- eine Speichereinheit, die ein Fluid in einem inneren Lumen speichert; und
- eine Verbindungsanordnung gemäß einem der Ansprüche 8 bis 10;
wobei die Verbindungsanordnung über die erste Durchführung mit dem inneren Lumen der Speichereinheit verbunden ist; und
wobei die Verbindungsanordnung konfiguriert ist, um die Versorgungsleitungen vom inneren Lumen der Speichereinheit zur Umgebung der Speichereinheit weiterzugeben, ohne dass Fluid aus der Speichereinheit leckt.

12. System gemäß Anspruch 11, wobei das innere Lumen der Speichereinheit Koaxialkabel (202) umfasst;
wobei zwischen den Koaxialkabeln und den Versorgungsleitungen des Versorgungssystems ein Übergang (204) vorgesehen ist;
wobei der Übergang so konfiguriert ist, um Signale des Koaxialkabels an die Versorgungsleitungen zu übertragen; und
wobei der Übergang konfiguriert ist, um die Signale des Koaxialkabels die erste Durchführung durch die Versorgungsleitungen passieren zu lassen.

13. System gemäß Anspruch 11 oder 12, wobei ein Teil des inneren Lumens des Speichertanks das Versorgungsleitungsrohr mit einer distalen Endöffnung (206) bildet;
wobei das Versorgungsleitungsrohr konfiguriert ist, um die Versorgungsleitungen zu umschließen; und
wobei die Verbindungsvorrichtung konfiguriert ist, um mit der distalen Endöffnung verbunden zu sein und die Versorgungsleitungen vom inneren Lumen des Speichertanks über das Versorgungsleitungsrohr zur Umgebung des Versorgungssystems weiterzuleiten.

14. Flugzeug (300), umfassend:
- ein Antriebssystem (302);
- einen Flugzeugrahmen (304);
- einem Kraftstoffspeicherraum (306); und
- ein Versorgungssystem gemäß einem der Ansprüche 11 bis 13
wobei der Flugzeugrahmen an dem Flugzeug befestigt ist und das Antriebssystem an dem Flugzeugrahmen befestigt ist und beide so konfiguriert sind, um das Flugzeug während eines Einsatzes schweben zu lassen und/oder zu beschleunigen;
wobei das Versorgungssystem so konfiguriert ist, dass es sich im Kraftstoffspeicherraum befindet und Kraftstoff im Inneren des Flugzeugs speichert; und
wobei das Versorgungssystem konfiguriert ist, um das Antriebssystem während des Einsatzes mit Kraftstoff zu versorgen.

15. Verfahren (400) zum Entfernen von leckendem Fluid aus einem Versorgungssystem:
- Bereitstellen (402) eines Versorgungssystems gemäß einem der Ansprüche 11 bis 13;
- Anbringen (404) eines Sensors an einem Gehäuse des Versorgungssystems;
- Bereitstellen (406) von Fluid für das Versorgungssystem;
- Betreiben (408) des Sensors während des Betriebs des Versorgungssystems;
- Erfassen (410) von leckendem Fluid innerhalb des Rückhaltevolumens durch den Sensor;
- Auffangen (412) des leckenden Fluids aus einer ersten Durchführung durch das Gehäuse;
- Mischen (414) des leckenden Fluids mit inertem Fluid im Gehäuse, um ein nicht explosives Fluid zu erhalten; und
- Freisetzen (416) des nicht explosiven Fluids aus dem Gehäuse.

## Revendications

1. Dispositif de connexion (10) destiné à faire passer des lignes d'alimentation (12) d'une unité de stockage (14) à un environnement (16) de l'unité de stockage, le dispositif comprenant :
- un volume de retenue (18) encapsulé par une enceinte (20);
- une première traversée (22); et
- une deuxième traversée (24);
dans lequel le premier traversée est disposé de manière à être fixé à l'enceinte et est configuré pour faire passer de manière étanche des lignes d'alimentation depuis une lumière interne (26) de l'unité de stockage vers le volume de retenue;
dans lequel le deuxième traversée est disposé de manière à être fixé à l'enceinte et est configuré pour faire passer de manière étanche les lignes d'alimentation depuis le volume de retenue vers l'environnement de l'unité de stockage;
dans lequel le premier traversée, le deuxième traversée et l'enceinte sont configurés pour être étanches aux fuites de fluide (30) stocké dans l'unité de stockage; et
dans lequel le volume de retenue est configuré pour capturer le fluide s'échappant par le premier traversée et pour empêcher le fluide qui s'échappe (32) d'atteindre l'environnement de l'unité de stockage.

2. Dispositif selon la revendication 1, dans lequel le volume de retenue est configuré pour fournir un fluide inerte (34); et dans lequel le fluide inerte est configuré pour se mélanger avec le fluide qui s'est échappé afin de produire un mélange de fluides non explosif (36).

3. Dispositif selon l'une des revendications 1 ou 2, dans lequel l'enceinte est configurée pour être connectée à un détecteur (38) destiné à détecter si du fluide qui s'est échappé est présent à l'intérieur du volume de retenue.

4. Dispositif selon la revendication 1, 2 ou 3, dans lequel l'enceinte comprend une connexion (40) pour fixer de manière étanche un conduit de ligne d'alimentation (42) guidant les lignes d'alimentation depuis l'unité de stockage vers le dispositif de connexion;
dans lequel le premier traversée est prévu à une extrémité (44) du conduit de ligne d'alimentation, le premier traversée fournissant une barrière (46) entre un volume intérieur (48) du conduit de ligne d'alimentation et le volume de retenue.

5. Dispositif selon l'une des revendications précédentes, dans lequel au moins l'un des premier et deuxième traversée est un traversée ATEX.

6. Dispositif selon l'une des revendications précédentes, dans lequel l'enceinte est configurée pour être connectée à un agencement de soupapes (50) configuré pour ventiler le volume de retenue.

7. Dispositif selon l'une des revendications précédentes, dans lequel l'enceinte est configurée pour être connectée à un un agencement de soupapes qui empêche un reflux d'un fluide environnemental (54) dans le volume de retenue.

8. Agencement de connexion (100) pour faire passer des lignes d'alimentation depuis une unité de stockage, l'agencement comprenant:
- au moins un conduit de ligne d'alimentation (42);
- au moins une lignes d'alimentation (12); et
- un dispositif de connexion (10) selon l'une des revendications précédentes;
dans lequel le au moins un conduit de ligne d'alimentation est configuré pour être connecté à l'unité de stockage et pour guider la au moins une ligne d'alimentation depuis la lumière interne de l'unité de stockage vers le dispositif de connexion; et
dans lequel la au moins un conduit de ligne d'alimentation s'étend à l'intérieur de la au moins une ligne d'alimentation à travers la première traversée dans le volume de retenue et depuis le volume de retenue à travers la deuxième traversée vers l'environnement.

9. Agencement selon la revendication 8, dans lequel les lignes d'alimentation sont prévues comme au moins l'une des suivantes :
i) des câbles pour transmettre des signaux électriques;
ii) des câbles pour transmettre de l'énergie électrique;
iii) guides optiques pour la transmission de signaux optiques;
iv) des guides thermiques pour transmettre des signaux thermiques; et
v) des tuyaux pour transporter des substances entre une lumière interne de l'unité de stockage et l'environnement.

10. Agencement selon la revendication 8 ou 9, dans lequel l'agencement de connexion comprend en outre :
- une unité interne (102); et
- une unité externe (104);
dans lequel l'unité interne et l'unité externe sont toutes deux connectées à au moins une ligne d'alimentation;
dans laquelle l'unité interne comprend au moins un élément parmi le groupe comprenant : une unité de détection et un élément chauffant; et
dans lequel l'unité externe comprend au moins un élément parmi le groupe comprenant : une unité d'acquisition de données et une source d'alimentation électrique.

11. Système d'alimentation (200), comprenant :
- une unité de stockage stockant un fluide dans une lumière interne; et
- un agencement de connexion selon l'une des revendications 8 à 10;
dans lequel l'agencement de connexion est connecté à la lumière interne de l'unité de stockage via le premier traversée; et
dans lequel l'agencement de connexion est configuré pour faire passer les lignes d'alimentation de la lumière interne de l'unité de stockage vers l'environnement de l'unité de stockage sans échappement de fluide provenant de l'unité de stockage.

12. Système selon la revendication 11, dans lequel la lumière interne de l'unité de stockage comprend des câble coaxial (202);
dans lequel une transition (204) est prévue entre les câble coaxial et les lignes d'alimentation du système d'alimentation;
dans lequel la transition est configurée pour transmettre les signaux du câble coaxial aux lignes d'alimentation; et
dans lequel la transition est configurée de telle sorte que les signaux du câble coaxial passent par la première traversée par les lignes d'alimentation.

13. Système selon la revendication 11 ou 12, dans lequel une partie de la lumière interne du réservoir de stockage forme le conduit de ligne d'alimentation avec une ouverture d'extrémité distale (206);
dans lequel le conduit de ligne d'alimentation est configuré pour enfermer les lignes d'alimentation; et
dans lequel le dispositif de connexion est configuré pour se connecter à l'ouverture d'extrémité distale et faire passer les lignes d'alimentation depuis la lumière interne du réservoir de stockage via le conduit de ligne d'alimentation vers l'environnement du système d'alimentation.

14. Aéronef (300), comprenant :
- un système de propulsion (302);
- une cellule (304);
- un espace de stockage de carburant (306); et
- un système d'alimentation selon l'une des revendications 11 à 13
dans lequel la cellule est fixée à l'aéronef et le système de propulsion est fixé à la cellule, et les deux sont configurés pour faire léviter et/ou accélérer l'aéronef lors d'une mission;
dans lequel le système d'alimentation est configuré pour être situé dans l'espace de stockage de carburant et stocke le carburant à l'intérieur de l'aéronef; et
dans lequel le système d'alimentation est configuré pour alimenter le système de propulsion en carburant pendant la mission.

15. Procédé (400) pour éliminer les échappements de fluide d'un système d'alimentation :
- Fournir (402) un système d'alimentation selon l'une des revendications 11 à 13;
- Fixer (404) un détecteur à une enceinte du système d'alimentation;
- Fournir (406) un fluide au système d'alimentation;
- Faire fonctionner (408) le détecteur pendant le fonctionnement du système d'alimentation;
- Détecter (410) le fluide qui s'est échappé à l'intérieur du volume de retenue à l'aide du détecteur;
- Capturer (412) le fluide qui s'est échappé d'un premier traversée à travers l'enceinte;
- Mélanger (414) le fluide qui s'est échappé avec un fluide inerte dans l'enceinte pour obtenir un fluide non explosif; et
- Libérer (416) le fluide non explosif de l'enceinte.
